Europäisches Patentamt

European Patent Office

Office européen des brevets

(19)

(11) **EP 0 709 998 A2**

(12) # DEMANDE DE BREVET EUROPEEN

(43) Date de publication:
**01.05.1996 Bulletin 1996/18**

(51) Int. Cl.⁶: **H04M 9/02**

(21) Numéro de dépôt: **95202852.0**

(22) Date de dépôt: **21.10.1995**

(84) Etats contractants désignés:
**DE FR GB IT**

(30) Priorité: **24.10.1994 ES 9402204**

(71) Demandeur: **Gorrochategui Grajirena, Javier**
**E-31008 Pamplona (ES)**

(72) Inventeur: **Gorrochategui Grajirena, Javier**
**E-31008 Pamplona (ES)**

(74) Mandataire: **Bruder, Michel**
**Cabinet Bruder**
**46 Rue Decamps**
**F-75116 Paris (FR)**

(54) ## Système de communication à deux fils pour interphones

(57)    Un système de communication à deux fils pour interphones consiste à établir la connexion entre le panneau de câbles (1) et les différents appareils téléphoniques (T) au moyen de deux fils uniquement (W1 et W2), chaque téléphone (T) ayant un circuit intégré de technologie CMOS, grâce auquel il est obtenu une très faible consommation pour chaque appareil (T). La ligne (W1) de chaque appareil (T) comprend un train d'impulsions numériques, dont le format est défini par une première partie de remise à zéro, une deuxième partie de codification puis une troisième d'appel acoustique.

Fig.1

## Description

La présente description a pour objet la déclaration de Brevet d'Invention qui, comme l'indique l'énoncé, concerne un "SYSTEME DE COMMUNICATION À DEUX FILS, POUR INTERPHONES".

On appelle installations d'interphones les installations permettant d'établir une communication entre un panneau d'appel, généralement située à l'entrée d'un immeuble, et une deuxième installation, constituée par les téléphones d'appartement, de manière à établir, au moyen du téléphone de chaque appartement, une communication avec la personne appelant ledit appartement depuis le panneau d'appel situé dans la rue, et à permettre l'accès de cette personne au hall d'entrée en agissant sur le mécanisme d'ouverture de portes.

Les solutions de communication existant actuellement pour ce genre d'installations d'interphones sont axées autour de trois types et sont les suivantes :

Solution A : Existence de quatre fils communs pour tous les appareils téléphoniques, l'un d'entre eux étant celui de la masse, un autre étant un fil audio allant au téléphone, un autre étant un fil audio allant au panneau d'appel, et enfin un quatrième étant destiné à l'ouverture des portes, c'est-à-dire au fonctionnement de la serrure du hall d'entrée. En plus de ces quatre fils communs a tous les téléphones, chaque téléphone nécessite pour lui seul, un fil indépendant des autres téléphones, fil appelé de retour vers le panneau d'appel.

Conformément à cette solution, une installation comprenant cinquante téléphones nécessiterait cinquante-quatre fils ; cinquante fils indépendants pour les différents téléphones et quatre fils communs à tous.

Solution B : Selon cette solution, sur les quatre fils communs à tous les téléphones, trois sont supprimés et un seul est conservé pour la masse tout en conservant les fils indépendants pour les différents téléphones. Conformément à cette invention, un montage comme le précédent, c'est-à-dire de cinquante téléphones, demanderait l'utilisation de cinquante et un fils, cinquante fils indépendants pour les différents téléphones et un fil commun.

Cette solution, bien qu'intéressante pour les installations qui se faisaient sur d'anciennes constructions, étant donné qu'elle évitait l'installation d'un câblage vers les appartements, ne se révèle pas réellement intéressante pour de nouvelles installations, dans la mesure où le fait d'économiser trois câbles ne représente pas une véritable économie de fils.

Solution C : Conformément à cette troisième solution, dénommée numérique, un bus de cinq fils communs ou plus est utilisé. Ce système permet d'éviter les retours d'appel, mais pour cela deux des fils sont destinés à l'alimentation des téléphones et le reste aux autres signaux. L'alimentation est une partie importante et représente normalement une consommation élevée si l'on considère qu'une installation peut comporter un grand nombre de téléphones et que ces derniers multiplient la consommation.

Le demandeur a inventé un nouveau système de communication qui nécessite uniquement l'utilisation de deux fils, l'un étant celui de la masse et l'autre étant celui sur lequel circulent les signaux d'appel ; d'ouverture de portes et d'audio (communication) ; tous les téléphones du système étant montés en parallèle ; tel que cela figure dans le brevet espagnol 8803079.

Or, dans ce système, le codage et le décodage se faisaient au moyen d'une modulation et d'une démodulation en fréquence, ce qui supposait un coût élevé pour chaque téléphone et, de plus, le système était limité, dans une certaine mesure, par la consommation de chaque téléphone, c'est pourquoi il était conseillé de ne pas dépasser les cent unités de téléphone, étant donné que la consommation était importante pour un nombre plus grand d'unités.

En se basant sur ce système d'installation à deux fils, il a été développé un nouveau système caractérisé par une faible consommation pour chaque unité de téléphone, de l'ordre de 50 à 60 microampères par téléphone, de sorte qu'il est possible d'obtenir une faible consommation, y compris avec 255 téléphones.

Pour cela, le système se base maintenant sur la transmission d'un train d'impulsions numériques, les téléphones étant dotés d'une série de microrupteurs programmés en mode binaire du nombre 1 au nombre représentant la quantité de téléphones que compte l'installation. Ces microrupteurs sont connectés à un circuit intégré de technologie CMOS, rendant ainsi possible une faible consommation pour chaque téléphone.

Par ailleurs, et comme il sera expliqué plus en détail tout au long de la description, ce système permet d'associer deux téléphones à un même code d'appartement, de sorte que, si ledit appartement reçoit un appel depuis le panneau d'appel, les deux téléphones sonnent et en décrochant l'un d'entre eux on bloque automatiquement l'autre, ce qui permet d'avoir une conversation au moyen du téléphone décroché et d'actionneur les différentes fonctions du système.

De même, une autre caractéristique importante de l'invention réside dans le fait qu'elle permet de réaliser des installations avec plusieurs panneaux d'appel appartenant à différentes portes d'accès et à la loge du concierge, avec la caractéristique que toutes les communications entre panneaux et loge du concierge s'effectuent également au moyen de deux fils.

Ces caractéristiques se traduisent par des améliorations apportées à l'objet de la présente invention, différenciant essentiellement le présent système de tous les autres connus jusqu'à maintenant.

Afin de mieux comprendre la nature de la présente invention, nous représentons sur les dessins annexés, à titre d'exemple purement illustratif et sans caractère limitatif, un mode préféré de réalisation industrielle auquel nous faisons référence dans notre description. Sur les dessins annexés :

la figure 1 représente au moyen d'un schéma une installation de base conformément à l'objet de la présente invention, afin de pouvoir constater que les différents téléphones (T) sont connectés au panneau d'appel (1) au moyen de deux fils uniquement (W1 et W2).

La figure 2 représente schématiquement le circuit général d'un téléphone (T).

La figure 3 représente le format du train d'impulsions numériques sur lequel est basé le système.

La figure 4 représente une vue semblable à celle de la figure 3 mais avec le circuit du téléphone (T) réalisé pour la version loge du concierge.

La figure 5 représente une vue schématique d'une autre installation, également conforme au système qui maintenant est préconisé, mais ici avec plusieurs panneaux (1.1, 1.2 et 1.3).

La figure 6 représente au moyen d'un schéma fonctionnel, l'application du système à une installation de base de vidéo-interphones.

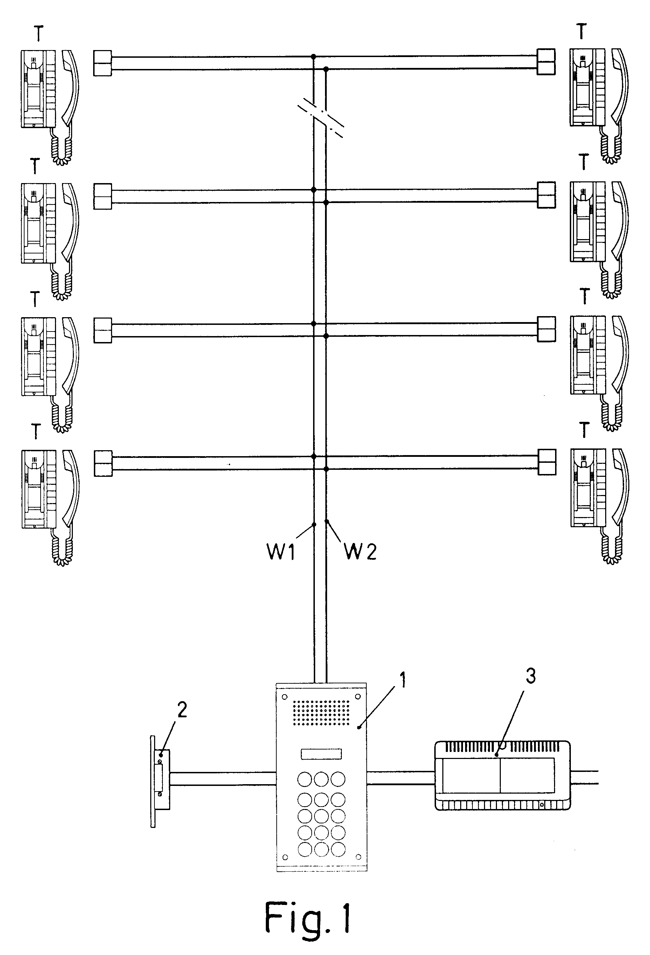

La présente invention concerne un système de communication à deux fils pour interphones, la figure 1 représentant le schéma d'une installation de base, réalisée conformément à la présente invention.

Cette installation est composée d'un panneau (1), appelé panneau d'appel depuis la rue, car étant situé au niveau de la porte d'entrée d'un immeuble ayant plusieurs appartements, dans chacun desquels il existe au moins un téléphone (T) à partir duquel il est possible d'établir une communication avec le panneau d'appel (1) et, lorsqu'il y a lieu, d'envoyer un ordre au panneau d'appel (1) pour activer le mécanisme d'ouverture de portes (2), permettant ainsi l'accès au hall d'entrée à la personne ayant appelé un appartement.

Tel que représenté sur la figure 1, le panneau (1) est connectée au bloc d'alimentation correspondant (3) qui reçoit la tension du réseau en courant alternatif et la transforme en une tension d'alimentation en courant continu, par exemple une tension de 24 volts.

Sur le panneau (1) sont connectés les différents téléphones (T) qui, comme nous le verrons par la suite, peuvent atteindre le nombre de 255 appareils, pour le même nombre d'appartements ou habitations différents.

La connexion entre les téléphones (T) et le panneau d'appel (1) s'effectue au moyen de deux fils uniquement (W1 et W2). Pour qu'il soit possible de connecter jusqu'à 255 téléphones (T) différents à une même panneau (1) au moyen de deux fils (W1 et W2) uniquement, la consommation de chaque téléphone doit être réduite.

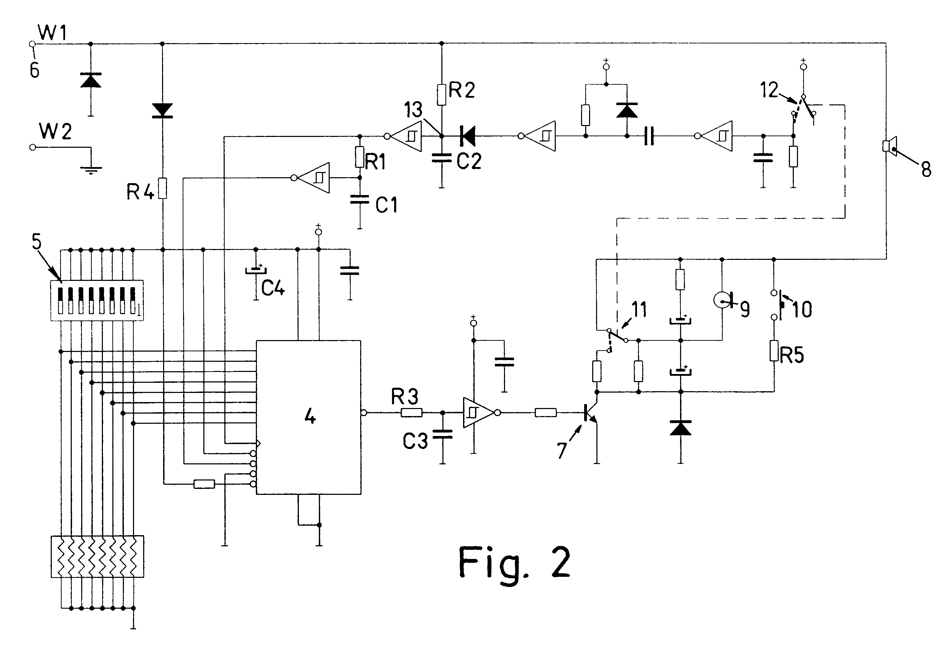

Pour cela, la figure 2 représente au moyen d'un schéma, le circuit de chaque téléphone (T) formé d'un circuit intégré de technologie CMOS (4), auquel sont connectés des microrupteurs (5), ce qui représente pour une installation de 255 téléphones (T) différents huit microrupteurs (5) programmés en mode binaire de 1 à 255. Conformément au code programmé pour les huit microrupteurs (5) de chaque téléphone (T), le compteur du CMOS (4) se charge selon le numéro attribué à ce téléphone (T), de manière à ce que chaque téléphone (T) ait ainsi un code différent correspondant à un numéro allant de 1 à 255, le système étant basé sur la transmission d'un train d'impulsions numériques.

Le mode de fonctionnement est le suivant : au point (6) de la ligne, il existe une tension assez élevée, d'environ 14 à 15 volts, afin que tous les téléphones (T) soient alimentés.

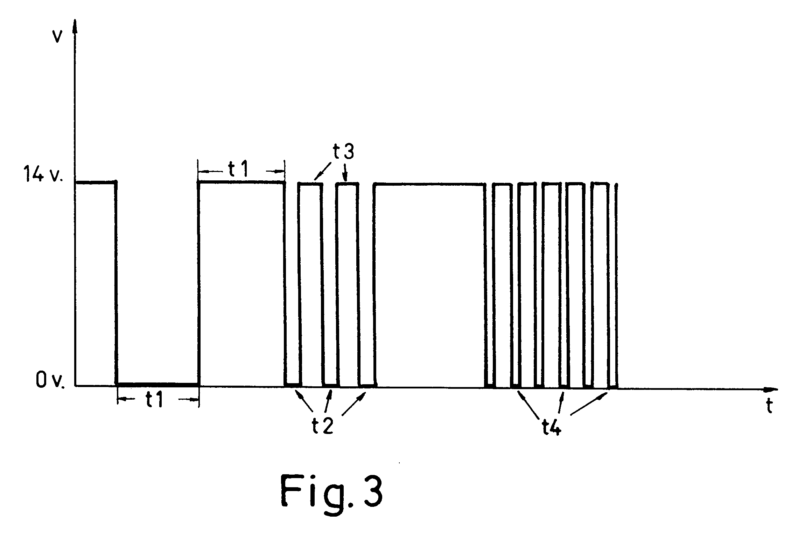

Durant un intervalle de temps (t1), voir figure 3, la tension en (W1) baisse jusqu'à zéro volt. La valeur de (t1) répond à la formule suivante :

$$t1 = 3 \times R1 \times C1$$

R1 ayant une valeur de deux cent vingts kilo-ohms (220 kW) et C1 une valeur de quarante-sept nano-farads (47 nF), il en résulte une valeur de (t1) de l'ordre d'une milliseconde. Durant le temps (t1) où la tension descend à zéro volt, il se produit une remise à zéro générale de tous les téléphones (T).

Une fois tous les téléphones (T) remis à zéro, si un appel se produit vers l'un d'entre eux, un train d'impulsions est envoyé, dans lequel la baisse de chaque impulsion dure un temps (t2).

Ce temps (t2) sera supérieur à la valeur de (R2) multiplié par (C2) et inférieur à celle de (R1) multiplié par (C1), c'est-à-dire :

$$R1 \times C1 > t2 > R2 \times C2$$

La valeur de (R2) est de deux cent vingts kilo-ohms (220 kW) et celle de (C2) d'un nano-farad (1 nF). La valeur de (t2) doit être inférieure à la valeur de (R1) multiplié par (C1) pour éviter qu'il ne se produise avec ce second train d'impulsions une remise à zéro des téléphones (T).

Ce train d'impulsions déclenché en appelant n'importe lequel des téléphones (T) passe ainsi au CMOS (4) de chacun des téléphones (T) et le compteur du CMOS (4) décompte une valeur pour chaque impulsion reçue.

Si ce train d'impulsions décompte toute la valeur du CMOS (4) d'un téléphone (T), cela signifie que c'est ce téléphone (T) qui est appelé et donc ce téléphone (T) et lui seul se mettra en fonctionnement, étant donné que son CMOS (4) envoie un signal qui va alors activer la base du transistor (7), ce transistor (7) se fermant ainsi et agissant comme un interrupteur de communication pour les circuits du haut-parleur (8), du microphone (9) et du bouton (10) d'ouverture de portes du téléphone (T) qui est appelé ; tout cela en correspondance avec le commutateur (11) situé sur la position représentée en trait gras à la figure 2.

Si l'on appelle par exemple le téléphone (T) qui dans l'ordre a le numéro trois, les deux premières impulsions d'appel laisseront au point zéro le CMOS (4) des téléphones ayant les numéros un et deux. De ce fait et afin d'éviter que le transistor (7) des téléphones (T) un et deux ne se ferme et que ces derniers ne se mettent en fonctionnement, un intervalle de temps constant (t3) est établi au moyen de (R3) et (C3), la valeur de (t3), comme représenté sur la figure 3, étant supérieure à celle de (t2), afin que si les téléphones (T) un et deux, une fois remis à zéro, reçoivent une nouvelle impulsion, le troisième charge alors son CMOS (4), avant que ne s'écoule l'intervalle de temps constant (t3), avec une valeur égale à celle du téléphone (T) ayant le numéro deux cent cinquante-cinq, les téléphones demeurant ainsi jusqu'à ce qu'une nouvelle remise à zéro de tous les téléphones (T) les ramène à leur valeur initiale.

Ainsi, lorsque le compteur du CMOS d'un téléphone (T) quelconque passe à zéro, ce téléphone ne peut pas être activé jusqu'à ce que, une fois le temps (t3), il reçoive une nouvelle impulsion. S'il reçoit ladite impulsion, une fois le temps (t3) écoulé, cela signifie qu'il ne s'agit pas du téléphone (T) appelé et son CMOS (4) passe à la valeur du deux cent cinquante-cinq.

En revanche, si une fois le temps (t3) écoulé celui-ci n'a reçu aucune nouvelle impulsion, cela signifie qu'il s'agit bien du téléphone (T) appelé et l'interrupteur de communication défini par le transistor (7) se referme.

Dès qu'un téléphone (T) est activé, un nouveau train d'impulsions est transmis, dont la baisse dure un temps (t4) inférieur à (R2) multiplié par (C2), afin que ces impulsions ne soient pas considérées comme compte d'appel à un téléphone (T) et qu'elles sonnent directement dans le haut-parleur (8) du téléphone (T) appelé, grâce au transistor de ce téléphone (T) qui demeure fermé et permet ainsi le passage de ce train d'impulsions vers le haut-parleur (8). De cette manière, l'appel se produit également dans le haut-parleur (8) du téléphone (T) appelé.

Dès que le combiné du téléphone (T) appelé est décroché, son commutateur (11) passe en position représentée en pointillés sur la figure 2, afin que le haut-parleur (8) et le microphone (9) soient en série, ce qui est détecté par la centrale située sur le panneau d'appel situé dans la rue (1) et les canaux audio sont alors activés. De cette façon, il est alors possible d'établir une communication entre le panneau d'appel (1) et le téléphone (T) appelé.

Comme il a été indiqué précédemment, le système peut supporter une installation allant jusqu'à deux cent cinquante-cinq téléphones (T) différents avec une consommation de l'ordre de vingt milliampères (20 mA).

Le système doit être réglé pour que la centrale détecte les différents stades de fonctionnement des téléphones (T). Cette détection s'effectue par l'intermédiaire des changements de consommation. Etant donné que ces changements doivent être clairement différenciés et que les consommations ne doivent pas être élevées car le microphone (9) et/ou le haut-parleur (8) pourraient brûler, on considère comme optimales les valeurs suivantes :

- Une consommation de ligne en décrochant un téléphone (T), entre vingt-cinq et quarante-cinq milliampères (25-45 mA), la valeur préférée étant de trente milliampères (30 mA).
- Une consommation de mise en fonctionnement du système d'ouverture de portes entre cinquante-cinq et quatre-vingt-dix milliampères (55-90 mA), la valeur optimale étant de soixante-quinze milliampères (75 mA).

La consommation de ligne s'approchera de préférence d'une valeur de 30 mA et, dans tous les cas, supérieure à 25 mA car la ligne, avec tous les téléphones (T) raccrochés consomme environ 20 mA et, par conséquent, en décrochant un téléphone (T), il doit se produire un saut détectable au-delà des 20 mA. Le minimum sera donc de 25 mA et la valeur préférée de 30 mA.

La consommation de mise en fonctionnement du système d'ouverture de portes de 75 mA est définie par la valeur de (R5) et cette valeur a été choisie de façon à pouvoir être détectée par la centrale située sur le panneau d'appel (1) et provoquer l'ouverture de la porte.

La consommation de cinquante à soixante microampères (50-60 mA) de chaque téléphone (T) est obtenue par le fait que cette consommation est déterminée par la valeur de (R4) plus l'impédance générale du CMOS (4). Si cette valeur est très élevée, la consommation est alors très basse.

La valeur de (R4) peut être de vingt-deux kilo-ohms (22 kW), ce qui, additionné à la haute impédance en continu du CMOS (4), nous permet d'atteindre une valeur de faible consommation sur les téléphones (T), de sorte que ces derniers n'affectent pas le système en surchargeant la ligne.

Il convient de souligner que la tension du CMOS (4) de chaque téléphone (T) se stabilise au moyen du condensateur (C4).

L'avantage d'utiliser dans chaque téléphone un circuit intégré de technologie CMOS (4), par rapport à une logique TTL ou à toute autre solution analogue, est la faible consommation du CMOS (4), ce qui permet d'intégrer la haute résistance (R4) à l'entrée.

Il convient de souligner que l'électronique même du microphone (9) rend possible une consommation stable pour chaque appareil, ce qui ne pourrait être obtenu avec les micros à charbon traditionnels.

Ce système permet également d'installer deux téléphones (T) en parallèle dans une même habitation, de façon à ce que tous deux soient identifiés par un même code de 1 à 255.

Si les deux téléphones (T) en parallèle appelés sont décrochés en même temps, la consommation des deux appareils serait de 30 mA plus 30 mA, soit 60 mA, ce qui se situe dans le seuil de la mise en fonctionnement du système d'ouverture de portes. De ce fait, il est nécessaire de bloquer un des deux téléphones (T) en parallèle.

Pour cela, le commutateur (12) du téléphone (T) décroché en premier passe sur la position représentée en pointillés sur la figure 2. Ceci permet l'introduction d'un signal au point (13), qui bloque l'entrée de l'impulsion sur la ligne (W1) de ce téléphone (T).

La centrale du panneau d'appel détecte qu'un téléphone a été décroché et introduit sur la ligne (W1) un train d'impulsions de remise à zéro, de manière à ce que tous les téléphones (T) soient remis à zéro, excepté le premier des deux téléphones (T) en parallèle qui a été décroché, tous les autres téléphones (T) se bloquant à ce moment, y compris le deuxième téléphone (T) en parallèle qui n'a pas été décroché.

Par ailleurs, ce système permet également d'établir une communication avec deux fils uniquement entre les téléphones (T) et un point dénommé loge du concierge, où se trouve la personne chargée de la surveillance de l'immeuble.

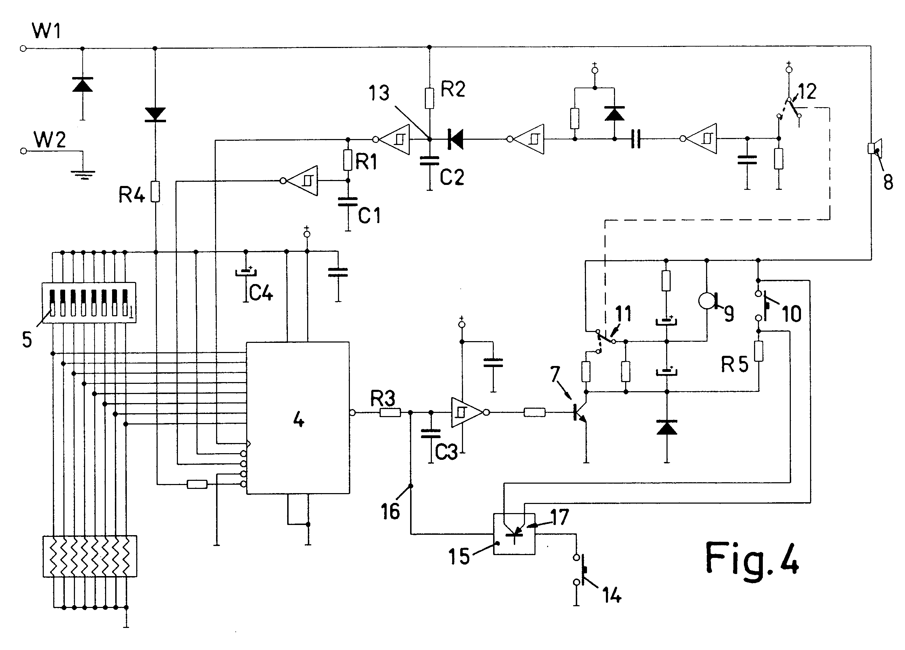

Pour cela, un circuit de mémoire d'appel de loge est ajouté aux téléphones (T), tel que représenté sur la figure 4.

En appuyant sur la touche (14) d'appel de loge, cette information est mémorisée dans le circuit (15). Par ailleurs, par l'intermédiaire du panneau (1), le système procède à des balayages en continu de tous les téléphones (T) par des séquences de déclenchement d'appel sur chacun d'entre eux sans produire l'appel, de sorte que, lorsque ce balayage arrive au téléphone (T) dont le circuit (15) possède en mémoire l'information d'appel à la loge du concierge, celui-ci est détecté par la ligne (16) et le transistor (17) se met en fonctionnement. C'est en quelque sorte comme si le circuit du bouton poussoir du système d'ouverture de portes (10) se fermait durant un temps très court, ce temps n'étant pas suffisamment long pour que se déclenche le système d'ouverture de portes (2), mais étant suffisamment long pour être détecté par la centrale du panneau (1), de manière à être mémorisé par cette dernière et que le circuit du téléphone (T) se remette à zéro.

Lorsque la ligne entre le panneau (1) et la loge du concierge est libre, l'appel est transmis à la loge du concierge par des impulsions modulées en fréquence, ce qui permet d'incorporer la loge du concierge à l'installation sans avoir à augmenter le nombre de fils des téléphones (T) qui restent seulement au nombre de deux (W1) et (W2).

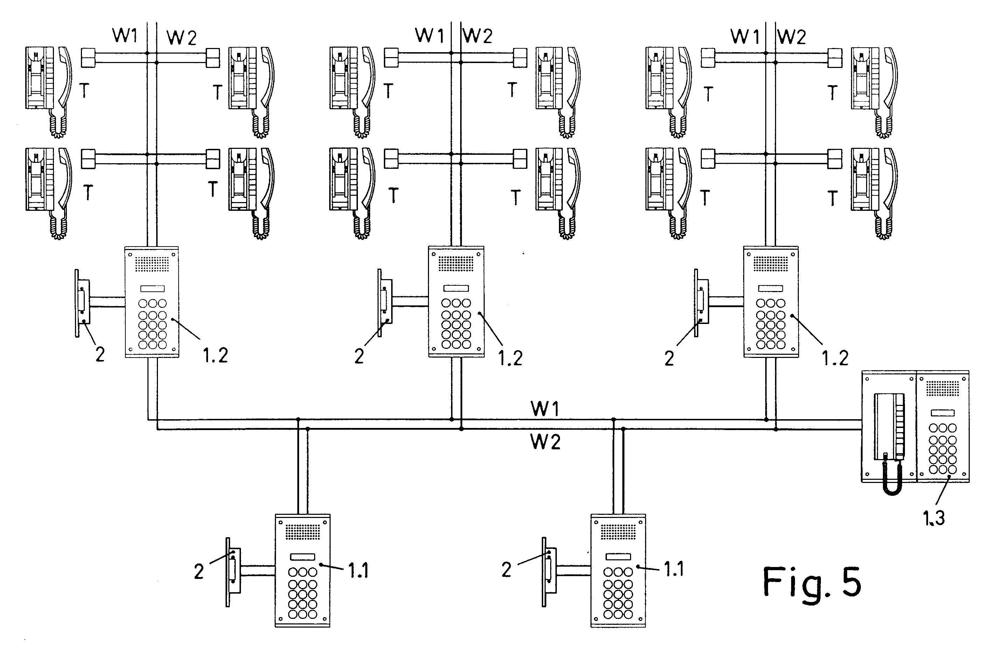

Sur la figure 5 est représentée à titre d'exemple de réalisation pratique, une installation formée de trois panneaux d'appel (1.2), à chacun desquels sont connectés les téléphones (T) correspondants.

Nous appellerons ces panneaux d'appel (1.2), panneaux secondaires.

De plus, il existe deux panneaux (1.1) que nous appellerons panneaux principaux et un panneau de loge du concierge (1.3).

Les panneaux secondaires (1.2) sont la base du système car les téléphones (T) sont connectés à ceux-ci. Ces panneaux (1.2.) effectuent les fonctions d'appel, de commande audio et vidéo, d'ouverture de portes etc. La communication ne peut se faire entre les panneaux secondaires (1.2).

Les panneaux principaux (1.1) permettent une communication entre eux et les panneaux secondaires (1.2), ce qui correspond, par exemple, à une porte d'accès général à un ensemble d'immeubles. N'importe quel téléphone (T) connecté aux panneaux secondaires (1.2), peut être appelé depuis chaque panneau principal (1.1), avec toutes les fonctions du système (audio, ouverture de portes, etc.)

En ce qui concerne le panneau de la loge du concierge (1.3), ce panneau ne correspond pas à une porte d'accès à un hall d'entrée d'immeuble, mais effectue des fonctions de protocole dans les communications.

Une de ces fonctions est de répondre aux appels des habitants de l'immeuble depuis leur propre appartement. Un habitant qui appuie sur la touche (14) située sur son téléphone (T), appelle le concierge (personne chargée de ce panneau). Ce dernier est informé de l'appel de cette personne et l'appelle (comme s'il s'agissait là d'un panneau principal), pour établir la communication avec elle.

L'autre fonction est celle du filtrage. Tout appel, avant de passer au téléphone (T), est dirigé vers ce panneau (1.3). Le concierge a le choix soit de couper la communication, soit d'ouvrir la porte ou de se mettre en contact avec l'occupant de l'appartement appelé (sans que la personne qui appelle le sache) pour le consulter. Une fois la réponse obtenue, le concierge autorise l'accès à l'immeuble ou met directement en communication les deux personnes et cesse d'intervenir. Ce type de fonctionnement est possible aussi bien pour des appels à partir des panneaux principaux (1.1) qu'à partir des panneaux secondaires (1.2).

Ces trois panneaux (1.1), (1.2) et (1.3) sont physiquement identiques, ils se différencient uniquement par leur configuration (modifiable à volonté à tout moment).

Les caractéristiques de cette installation sont détaillées ci-après :

- Les téléphones (T) sont connectés au panneau de commande par deux fils uniquement (W1) et (W2).

De même, la connexion entre les panneaux (1.1), (1.2) et (1.3) est établie au moyen de deux fils uniquement (W1) et (W2), ce qui se traduit par une grande simplicité d'installation et d'entretien et par une importante réduction du coût du câblage.

- L'appel est codé, c'est-à-dire qu'il n'existe pas une touche d'appel pour chaque appartement, mais qu'à chaque appartement correspond un code numérique à trois chiffres. Ceci a pour avantage d'avoir un panneau d'appel (1) de dimension réduite, puisqu'il ne comporte que 10 touches numériques (plus une touche quelconque de contrôle), au lieu d'une par appartement. De plus, ce système garantit le secret d'accès.

En plus du code d'appel, chaque appartement peut disposer d'un code à 5 chiffres qui une fois inscrit sur le clavier permet l'ouverture de la porte, éliminant ainsi la nécessité d'avoir sur soi la clef du hall d'entrée.

Fonction de répertoire : Cette fonction permet de visualiser sur un écran alphanumérique le nom (ou la raison sociale), l'étage et le code de chaque voisin. Cela grâce à trois touches, deux servant à localiser la personne recherchée (mémorisée par ordre alphabétique) et une d'appel afin de ne pas avoir à taper le numéro de code une fois la personne localisée.

L'écran permet de visualiser des informations additionnelles, telles que l'heure (le circuit dispose d'une horloge de temps réel RTC), la température, le mode d'emploi, l'état du système, etc.

Le système commande également, en plus du téléphone de base, les moniteurs, les caméras etc. pour son fonctionnement en vidéo-interphone.

Il est doté d'interfaces RS-232 pour sa programmation à partir d'un ordinateur personnel, d'un modem, d'un Minitel, etc.

Le panneau de commande possède une connexion à deux fils avec d'autres panneaux similaires pour créer un réseau de panneaux interconnectés, option très utile pour des logements privés par exemple, ensembles d'habitations, loge de concierge etc.

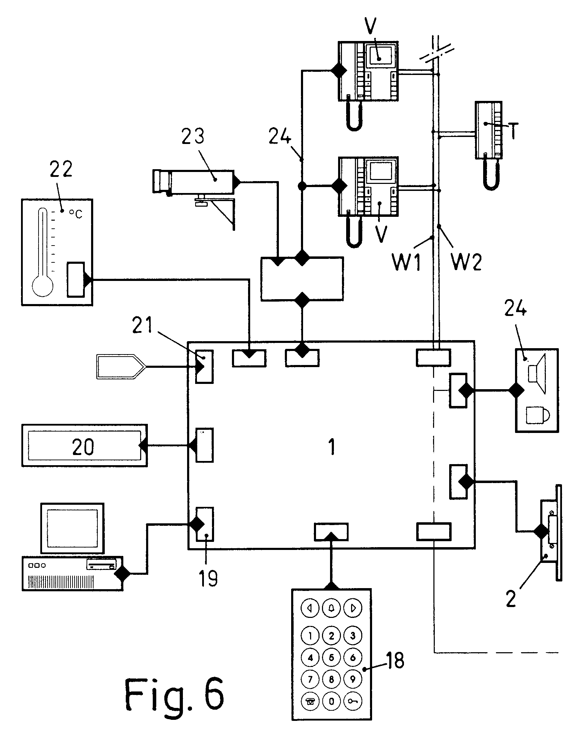

Sur la figure 6 est représentée, au moyen d'un schéma fonctionnel, une installation de vidéo-interphone selon la présente invention. La connexion entre les vidéo-phones (V) et le panneau d'appel (1) se fait à nouveau ici au moyen de deux fils uniquement (W1 et W2), les deux vidéo-phones (V) nécessitant uniquement le câble coaxial (24) d'antenne correspondant.

Le panneau d'appel (1) est équipé d'une caméra vidéo (23) et d'un groupe phonique (24), ainsi que d'un clavier (18) ; une interface (19) de connexion à un ordinateur externe ou autre moyen similaire pour sa programmation ; un écran alphanumérique (20), pour visualiser des informations supplémentaires ; une connexion (21) d'alimentation et une plaque de température (22).

La description de la nature de la présente invention, ainsi que celle de sa réalisation industrielle, étant suffisamment complète, il convient seulement d'ajouter que le brevet d'invention est demandé pour une durée de vingt ans comme invention nouvelle et qu'il est possible, dans son ensemble ou dans certaines parties la constituant, d'introduire des modifications de forme, de matière et de disposition sans sortir du cadre de l'invention, du moment que ces modifications ne dénaturent en rien son fondement.

**Revendications**

1. Système de communications à deux fils pour interphones, caractérisé en ce que la connexion entre le panneau d'appel (1) correspondant et les téléphones (T) est établie au moyen de deux fils (W1 et W2) uniquement, chaque téléphone (T) étant doté d'un circuit intégré de technologie CMOS (4), dont l'impédance élevée en courant continu, ainsi que la valeur d'une résistance (R4), permet une très faible consommation pour chaque téléphone (T).

2. Système de communication à deux fils pour interphones selon la revendication précédente, caractérisé en ce que chaque téléphone (T) est doté de microrupteurs (5) programmés en mode binaire selon une valeur corrélative pour les différents téléphones (T), un train d'impulsions numériques étant introduit dans la ligne (W1) de chaque téléphone (T) ; le format de ce train d'impulsions numériques étant défini par une première partie de remise à zéro, suivie d'une deuxième partie de codification et une troisième d'appel acoustique.

3. Système de communication à deux fils pour interphones selon la revendication 1, caractérisé en ce que pour une installation comprenant deux cent cinquante-cinq téléphone (T), la consommation sur ligne quand on décroche un téléphone (T) est comprise entre vingt-cinq et quarante-cinq milliampères (25-45 mA), celle-ci étant de préférence de trente milliampères (30 mA) ; tandis que la consommation de mise en action du système (10) d'ouverture de portes est comprise entre cinquante-cinq et quatre-vingt-dix milliampères (55-90 mA), celle-ci étant de préférence de soixante-quinze milliampères (75 mA).

4. Système de communication à deux fils pour interphones selon les revendications 1 et 2, caractérisé en ce que le format du train d'impulsions numériques est défini par un intervalle de temps (t1) pendant lequel la tension en (W1) descend à zéro volt pour la remise à zéro générale ; un temps (t2) pour la durée des impulsions de la phase de codification durant laquelle un nombre d'impulsions égal au code du téléphone (T) que l'on souhaite appeler est transmis, de sorte que le téléphone (T), pour lequel la fin des impulsions coïncide avec le zéro de son CMOS (4), qui ferme un interrupteur de commutation, constitué par un transistor (7) ; ces impulsions de codification sont séparées par un intervalle de temps constant (t3) supérieur à (t2) pour éviter que ne se referme l'interrupteur de commutation (7) d'un téléphone (T) qui n'est pas celui qui est appelé.

5. Système de communication à deux fils pour interphones selon les revendications 1 et 2, caractérisé en ce que dans le format du train d'impulsions numériques, la partie d'appel acoustique est définie par des impulsions dont la baisse dure un temps (t4) inférieur à (t2), afin que celles-ci ne soient pas considérées comme impulsions de codification.

6. Système de communication à deux fils pour interphones selon les revendications 1 et 2, caractérisé en ce que selon un mode de réalisation préféré, la valeur de (t1) est de l'ordre d'une milliseconde et cor-

respond à la formule (t1 = 3xR1xC1) ; tandis que (t2) a une valeur inférieure à (R1xC1) et supérieure à (R2xC2).

7. Système de communication à deux fils pour interphones selon les revendications 1 et 2, caractérisé en ce que chaque téléphone (T) possède un commutateur (12) qui, lorsque le combiné est décroché, passe sur une position bloquant l'entrée d'impulsions sur la ligne (W1) de ce téléphone (T), rendant possible la remise à zéro des autres appareils, y compris celle d'un téléphone (T) monté en parallèle avec celui-ci, ce qui permet de monter deux téléphones (T) en parallèle sous un même code.

8. Système de communication à deux fils pour interphones selon les revendications 1 et 2, caractérisé en ce que le système permet d'incorporer des panneaux principaux (1.1), des panneaux secondaires (1.2) et des panneaux de loge de concierge (1.3), la communication s'établissant entre ces panneaux au moyen de deux fils (W1 et W2)

9. Système de communication à deux fils pour interphones selon les revendications 1, 2 et 8, caractérisé en ce que lorsque l'installation comprend un panneau de loge de concierge (1.3), chaque téléphone (T) est doté d'un circuit de mémoire (15), où est mémorisé l'appel à la loge du concierge, entraînant par ailleurs une consommation égale à celle du système d'ouverture de portes mais pendant un temps très court ; cette consommation est détectée par la centrale du panneau (1) correspondante, de sorte que, lorsque la ligne avec la loge du concierge (1.3) est libre, l'appel peut être transmis, la transmission s'établissant par impulsions modulées en fréquence.

T T

T T

T T

T T

W1 W2

2 1 3

Fig.1

Fig. 2

Fig. 3

Fig. 4

Fig. 5

Fig. 6